# EUROPEAN PATENT SPECIFICATION

(11) **EP 0 591 000 B1**
(45) Date of publication and mention of the grant of the patent: **15.04.1998**
(21) Application number: 93307817.2
(22) Date of filing: 01.10.1993
(51) Int. Cl.: A01N 35/06

(54) **Finely divided anthraquinone formulations as inhibitors of sulfide production from sulfate-reducing bacteria**
Feinteilige Anthrachinonformulierungen als Hemmstoffe der Sulfidbildung durch sulfatreduzierende Bakterien
Formulations d'anthraquinone finement granulée suprimant la production de sulfide par des bactéries de réduction de sulfate

(30) Priority: 02.10.1992 US 955623; 21.09.1993 US 122614
(43) Date of publication of application: 06.04.1994
(73) Proprietor: BIO-TECHNICAL RESOURCES LP, Manitowoc, WI 54220 (US)
(72) Inventor: Tatnall, Robert Emmett, Chadds Ford, PA 19317 (US)
(74) Representative: Rickard, Timothy Mark Adrian

(56) References cited:
- EP-A- 0 173 964
- WO-A-91/15954
- WO-A-92/10937
- BE-A- 696 849
- US-A- 3 558 787
- US-A- 3 897 564
- W. VAN VALKENBURG, "Pesticide Formulations", 1973, Dekker, New York, NY (US); Chapter 5, J.A. POLON, pp. 143-212
- S.S. BLOCK, "Disinfection, Sterilization, and Preservation", 1991, Lea & Febiger, Philadelphia, PA (US); Chapter 53, J.R. SIFONTES et al., pp. 948-974

## Description

### BACKGROUND OF THE INVENTION

### 1. Field of the Invention:

As is described in copending and commonly owned PCT WO91/15954, and in U.S. Patent Application Serial No. 07/652,406, filed February 2, 1991, by Paul J. Wiemer, et al., many anthraquinones and corresponding anthraquinol and tetrahydroxyanthraquinone derivatives thereof, inhibit sulfide production from sulfate-reducing bacteria and are thus potentially useful chemicals for treating industrial mediums where biological sulfide generation is a problem. Examples include the prevention of souring of oil wells with hydrogen sulfide, the contamination of surface operations such as pipelines and storage tanks with hydrogen sulfide, and the generation and release of hydrogen sulfide in municipal sewage treatment plants.

Hereinafter, the term "anthraquinone(s)", as used in this application, means anthraquinone compounds, the corresponding anthraquinol derivatives, the corresponding tetrahydroanthraquinone compounds, the corresponding octahydroanthraquinone compounds, and the reduced derivatives thereof. These anthraquinones are relatively benign environmentally and many are relatively specific for inhibiting sulfide generation. As a consequence, many of these compounds may be useful in treating situations that are incompatible with the use of broad-spectrum biocides such as municipal sewage treatment.

In accordance with the present invention, it has been found that formulations of these sulfide production-inhibiting anthraquinone compounds wherein the compound is extremely finely divided exhibit vastly superior sulfide production inhibition.

### 2. Description of Related Art:

Many sulfate-reducing bacteria are known, particularly those of the genera Desulfovibrio, Desulfotomaculum, Desulfobacter, Desulfobulbus, Desulfococcus, Desulfonema, Desulfosarcina and Thermodesulfobacterium. The term sulfate-reducer encompasses a broad spectrum of organisms across both eubacterial and archaebacterial branches of bacterial phylogeny.

There are currently approximately 130 different industrial biocide products registered with the U.S. Environmental Protection Agency. However, none of the known commercial chemicals are specific for sulfate-reducing bacteria, although many have demonstrated effectiveness against sulfate-reducers. Thus none of these biocides are acceptable where sulfite production inhibition is desired without otherwise impacting on the bacteria present, such as in municipal sewage treatment.

### SUMMARY OF THE INVENTION

The present invention relates to a process and compositions for inhibiting sulfide production by sulfate-reducing bacteria comprising contacting the sulfate-reducing bacteria with sulfite production-inhibiting anthraquinones that are in finely divided form.

### BRIEF DESCRIPTION OF THE DRAWINGS

Figure 1 is a plot showing the effectiveness of various particle size anthraquinone in inhibiting the growth of sulfate-reducing bacteria after 24 hours.

Figure 2 is a plot showing the effectiveness of various particle size anthraquinone in inhibiting the growth of sulfate-reducing bacteria over a period of several days.

### DETAILED DESCRIPTION OF THE INVENTION

This invention comprises a process and compositions to inhibit sulfide production by sulfate-reducing bacteria comprising contacting the medium containing the sulfate-reducing bacteria with sulfite production-inhibiting (active) anthraquinones in finely divided form.

The term "finely divided" means that the anthraquinone compound in the composition has an average particle size of less than 2.5 microns and preferably less than 2.0 microns. As a practical matter the minimum particle size is about 0.1 micron. It has been noted that as the average particle size is decreased within the "finely divided" range the inhibition activity of the anthraquinone increases. The activity of the anthraquinone compounds with respect to inhibiting the growth of sulfate-reducing bacteria has been found to be a function of particle size and not available surface area. Thus an anthraquinone compound having an average particle size of 2.0 microns used at a concentration of 5 ppm provides satisfactory inhibition of growth of sulfate-reducing bacteria whereas the same anthraquinone compound having an average particle size of for instance 3.7 microns used at a concentration of 30 ppm does not provide satisfactory inhibition of growth of sulfate reducing bacteria. This difference in effectiveness due to particle size is readily apparent upon initial application of the anthraquinone compound but is even more pronounced a short time after application of the anthraquinone compound when the effectiveness of the larger particle size anthraquinone compounds is effectively completely lost.

Thus, the compositions of the present invention comprise a finely divided sulfide production-inhibiting anthraquinone compound.

In use, the compositions are applied to the locus of or medium containing the sulfate-reducing bacteria which generally is aqueous, in a quantity sufficient to inhibit sulfide production. As little as 1ppm in the aqueous medium gives significant inhibition for many uses; in the preferred process the concentration of active anthraquinone compound in the medium is at least 5ppm, desirably 5-50ppm. Greater concentrations, such as up to 100 ppm, of course can be used, but in most cases with little advantage so long as the "finely divided" particle size requirement is met.

The activity of various anthraquinones in the inhibition of sulfide production by sulfate-reducing bacteria can be predicted based upon analysis of the substituents present, which is discussed in detail in WO91/15954.

A total of 147 different active anthraquinones were named according to the rules found in the 7th Collective Index of Chemical Abstracts.(I)

Anthraquinones suitable for use herein can be represented by structure (A): 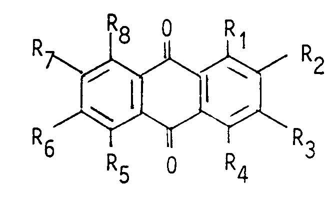 wherein R₁ is alkyl, aryl, amino, NO₂, NO, diazonium, amido, sulfonamido, arylamino, hydroxy, alkoxy, sulfo, chloro or bromo: R₂ is alkyl, aryl, carboxy, amino, NO₂, NO, diazonium, amido, sulfonamido, arylamino, hydroxy, alkoxy, sulfo, chloro or bromo: R₃ is alkyl, aryl, carboxy, hydroxy, alkoxy, sulfo or chloro: R₄ is alkyl, aryl, amino, NO₂, NO, diazonium, amido, sulfonamido, arylamino, hydroxy, alkoxy, chloro or bromo: R₅ is amino, NO₂, NO, diazonium, amido, sulfonamido, arylamino, hydroxy, alkoxy, sulfo, chloro or bromo: R₆ is alkyl, aryl, amino, NO₂, NO, diazonium, amido, sulfonamido, arylamino, hydroxy, alkoxy, sulfo or chloro: R₇ is alkyl, aryl, hydroxy or sulfo; and R₈ is hydroxy or chloro: or the corresponding derivative of structure (A).

The preferred anthraquinones to inhibit sulfide production by sulfate-producing bacteria are anthraquinone, 1,8-dihydroxyanthraquinone, 1-chloroanthraquinone, 2-chloroanthraquinone, 2-chloroanthraquinone-3-carboxylic acid, 1,5-dihydroxyanthraquinone, 1-aminoanthraquinone, 2-aminoanthraquinone, 2,6-dihydroxyanthraquinone, 1,2-dihydroxyanthraquinone, 1-hydroxyanthraquinone and 1,5-dichloroanthraquinone.

Many of the active anthraquinones are commercially available, including those listed above. The preparation of anthraquinol derivatives from anthraquinones is known to those skilled in the art.

Sulfide production by a number of different sulfate-reducing bacteria is inhibited by the method and compositions of the present invention. When an inhibitory active anthraquinone agent is added to a growing culture of Desulfovibrio sp. growth and sulfide formation cease immediately at anthraquinone concentrations of 3ppm. This cessation typically lasts for several days after which growth resumes. This effect has been demonstrated with several different species of Desulfovibrio in pure culture. It has also been found that the redox potential of the culture affects the potency of the anthraquinone. Compounds are most effective when added to a culture in early exponential growth where some sulfide has already been produced thus rendering the medium more reduced than uninoculated medium. However, compounds still show some inhibition when added to oxidized medium which is subsequently inoculated. It has been shown that use of a reducing agent can enhance the strength of the inhibition even when the inhibitor is added concurrently with the inoculum. This aspect would suggest that the compounds are most effective under anaerobic, reduced conditions as would be found in, for example a sewage treatment anaerobic digestor, or in another respect the compounds may be thought of as being activated by the end-product of the sulfate-reducer which is sulfide.

The compositions of the present invention comprise at least one relatively non-soluble hydrophobic anthraquinone compound of finely divided particle size. Although the composition may be in the form of a suspension in water or a water-miscible carrier, the preferred compositions are dry, free-flowing particles such as a wettable powder.

Because of the hydrophobic nature and low water solubility of the anthraquinone compound (<10ppm for most compounds), the preferred compositions also contain a surfactant, or wetting agent. The surfactant can be applied by any of a variety of techniques. In the case of a normally solid surfactant, the surfactant and the ™anthraquinone compound can be dry blended, preferably prior to the milling step. In the case of a normally liquid surfactant the surfactant can be sprayed onto the anthraquinone compound followed by mixing such as tumbling to ensure that an intimate well dispersed mixture is obtained. Alternatively a liquid solution of the surfactant can be sprayed on the anthraquinone compound and the anthraquinone compound further mixed. The choice of surfactant is not critical. Any of the commercially available surfactants that are inert to the anthraquinone and other composition ingredients and are compatible with the use environment are suitable.

Typical of such surfactants are nonionic, cationic and anionic with the nonionic surfactants being preferred. These include Triton X-100, a nonionic octylphenoxypolyethoxyethanol, available from Rohm & Haas Co.; Poly-Tergent SLF18, poly(oxyethylene-polyoxypropylene)-mono-hexylether; mono-octylether; mono-decylether, available from Olin Corp.; Morwet D-425, an anionic sodium salt of condensed naphthalene sulfonate, available from Witco Chemical Co.; Stepsperse DF-500, an anionic blend of lignin sulfonates, available from Stephan Co.; Stepwet DF-90, an anionic linear alkylbenzene sulfonate, available from Stephan Co.; Stepsperse DF-100, an anionic/nonionic blend including lignin sulfonate, available from Stephan Co.; Stepflow 41, an anionic lignin sulfonate, available from Stephan Co.; and Stepflow 24, a nonionic nonylphenolethoxylate, available from Stephan Co.

The surfactant is present in the dry compositions, for example a wettable powder, in an amount to enable the anthraquinone compound particles to be quickly wetted and thoroughly dispersed in the aqueous bacteria use locus. Quantities in the range of 2 % to 15 %, based on the weight of the anthraquinone compound, are generally preferred.

As aforementioned, the compositions sometimes may advantageously contain a reducing agent. Any reducing agent that eliminates oxidative tendencies of the medium, and that is inert to the composition ingredients and compatible with the use environment can be used.

The preferable amount of reducing agent used is that which will introduce about 2-4 mM in the aqueous locus. Typical of the useful reducing agent is sodium sulfide.

The bulk anthraquinone compounds are normally obtained as particles or granules of comparatively large average particle size, as dry powders or slurries. To prepare the compositions of the present invention, the anthraquinone compounds are comminuted to the required finely divided particle size, which can be ascertained using conventional means such as a Coulter counter or a laser particle analyzer. Any means for particle size reduction may be used, such as ball milling, sand milling, pin milling, air milling, and wet milling with an agitator. In the preferred technique, dry bulk anthraquinone compound is dry milled to the critical particle size, and then admixed with the other ingredients such as surfactant and reducing agent. If desired, these other ingredients may be introduced during the particle size reduction.

Generally the finely divided anthraquinone of the present invention are used in the form of aqueous dispersion containing 10 to 60 wt. % of an anthraquinone

The preferred aqueous dispersions of the present invention contain 10 to 60 wt. % 9,10 anthraquinone, 0.5 to 2.5 wt. % of a nonylphenolethoxylate, 0.1 to 1.5 wt. % of sodium lignosulfonate, 0.1 to 1.0 wt. % of calcium lignosulfonate, 0.05 to 2.0 wt. % of a xanthan gum and the remainder water. In a more preferred aspect of the invention the aqueous dispersion, in addition to the materials set forth in the previous sentence, contains 0.005 to 0.3 wt. % 1,2-benzothiazolin-3-one, 0.1 to 1.0 wt. % polydimethylsiloxane, and 1.0 to 10 wt. % propylene glycol. In an even more preferred aspect of the present invention, the aqueous dispersion contains 45 to 55 wt. % 9,10-anthraquinone, 0.5 to 1.5 wt. % 10 mole nonylphenolethoxylate and 0.2 to 0.5 wt. % sodium lignosulfonate, 0.1 to 0.3 wt. % calcium lignosulfonate, 0.1 to 0.5 wt. % magnesium aluminum silicate, 0.05 to 0.5 wt. % xanthan gum and the balance water. Additionally the most preferred aqueous dispersion of the present invention contains 0.05 to 0.3 wt. % 1,2-benzothiazolin-3-one, 0.1 to 0.4 wt. % polydimethylsiloxane, and 2 to 5 wt. % propylene glycol.

The following Examples demonstrate the preferred practice of the present invention, and show the greatly increased sulfite production inhibition capabilities of finely divided active anthraquinone compounds.

### EXAMPLES

### Example 1.

Anthraquinone, obtained from Lancaster Synthesis Ltd, is blended with surfactants, silica and clay as reported in Table I below. The blended ingredients are then ground to various average particle sizes either by dry grinding in a laboratory air mill or by wet grinding as an aqueous slurry using a Netzsch Molinex Agitator mill. Average particle size is determined with a Leeds & Northrup Microtrac SPA laser instrument.

**TABLE I**

| Sample ID | Formula | Weight % | Grinding Method | Avg. Particle Size (microns) |
|---|---|---|---|---|
| A | Mobay anthraquinone (AQ) | 79.9 | Wet | 3.49 |
| | Stepan Stepwet DF-90 wetting agent | 1.5 | | |
| | Stepan Stepsperse DF-500 dispersant | 7 | | |
| | Stepan Stepsperse DF-100 dispersant | 6 | | |
| | PPG Hi-Sil 233 hydrated amorphous silica | 0.5 | | |
| | barden clay | 5 | | |
| | Eastman Kodak SWS-211 antifoam | 0.1 | | |
| B | Same as "A" but without the DF-90; AQ was | 81.4% | Wet | 2.86 |
| C | Mobay AQ | 79 | Dry | 2.73 |
| | Stepwet DF-90 | 1.5 | | |
| | Stepsperse DF-500 | 7 | | |
| | Stepsperse DF-100 | 6 | | |
| | Hi-Sil 233 | 1 | | |
| | barden clay | 5.5 | | |
| D | Lancaster Synthesis AQ | 90 | Dry | 1.84 |
| | Stepwet DF-90 | 0.5 | | |
| | Stepsperse DF-500 | 6 | | |
| | Stepsperse DF-100 | 3 | | |
| | Hi-Sil 233 | 0.5 | | |
| E | same as "B" | | Wet | 1.52 |
| F | same at "B" | | Wet | 0.95 |
| G | Mobay AQ - 0.1 dissolved in acetone | | (solution) | <0.1 |

These preparations were then dispersed in water to produce a concentrated suspension of anthraquinone particles of known concentration (except for "G", which was used directly as prepared).

Serum bottles of 60ml capacity were each filled to the 50ml level with Postgate's "B" medium designed for growing sulfate reducing bacteria. The Postgate's medium was first deaerated, and then transferred to the bottles under nitrogen. The bottles were capped with elastomeric septum closures, and then autoclaved.

Into two of these bottles was injected a pure culture of Desulfovibrio desulfuricans strain G100A, as isolated by the DuPont Co. These cells were allowed to grow and proliferate overnight at 30°C to produce a bacteria enrichment suspension.

To determine the relative effectiveness of the various anthraquinone preparations as sulfide inhibitors, additional serum bottles containing Postgate's B medium were first inoculated with the above cell inoculum, 3ml per bottle. Two of these were then set aside as untreated controls. The remainder were additionally inoculated with known quantities of anthraquinone from the above preparations. All bottles were then shaken to homogenize contents and assayed for total hydrogen sulfide using the standard methylene blue colorimetric method and Hach, Co. reagents. This number was recorded as the "starting" level of sulfide.

The bottles were then incubated at 30°C for about 30 hours, then reshaken and again assayed for total sulfide. The bottles treated with 1 ppm AQ were compared with the untreated controls, and a percent inhibition for each case determined as follows:

| Compound Code | Avg. Part. (microns) | Percent Inhibition |
|---|---|---|
| A | 3.49 | 12 |
| B | 2.86 | 15 |
| C | 2.73 | 20 |
| D | 1.84 | 39 |
| E | 1.52 | 46 |
| F | 0.95 | 66 |
| G | <0.1 | 75 |

The expression <0.1 means that the anthraquinone is in solution and the particle size is less than 0.1 micron. The effectiveness of the acetone solution would normally be greater than shown here - more on the order of 95% to 98% inhibition at the 1 ppm dose rate (based on many tests by the method described). The lower level seen here indicates that the incubation time was too long, so that the few "uninhibited" bacteria had begun to grow significantly and produce hydrogen sulfide. Nonetheless, these numbers are still useful to indicate "relative" effectiveness of the various anthraquinone preparations. The conclusion drawn is that inhibition effectiveness is a function of anthraquinone particle size - i.e. the smaller the particle the better it's performance as a sulfide inhibitor.

### Example 2.

Anthraquinone from ICI Americas, Inc. is blended as per the following formula:
Anthraquinone - 79% w/w
Stepwet DF-90 - 2%
Stepsperse DF-100 - 6%
Stepsperse DF-500 - 7%
Hi-Sil 233 - 1%
barden clay - 5%

This powder compound is then ground in a laboratory air mill to produce various average particle sizes. These compounds are compared in a biological test identical to that described in Example 1, and the results compared to no treatment and to an acetone solution of anthraquinone (i.e. particle size ≈ 0.0 microns). Results are as follows:

| Avg. Particle Size (microns) | Percent Inhibition |
|---|---|
| 5.66 | 0 |
| 3.61 | 14 |
| 2.13 | 35 |
| 1.34 | 82 |
| 1.33 | 94 |
| <0.1 | 92 |

Again, a strong correlation between particle size and inhibition is observed, with particles near or below about 2 microns performing much better than particles in the 3-6 micron range. It should be noted that these tests involved single data points with each compound, and there is some inherent imprecision in the methods.

### Example 3.

A pure strain of Desulfovibrio gigas is grown overnight in a lactate medium and the cells harvested by centrifugation, then resuspended in Hepes buffer at pH 7. This is then recentrifuged, the supernatant discarded, and the cells suspended in a solution of 50mM Hepes buffer, 50mM sodium lactate and 50mM sodium sulfate. This cell suspension is placed in evacuated glass tubes and then gassed with hydrogen to reduce the medium and to provide a hydrogen-rich atmosphere in the tubes. The Hepes/lactate/sulfate medium is chosen because it would support cell respiration (i.e. enzyme reactions such as sulfate reduction), but would not, in a short test, support significant cell metabolism and growth.

The tubes are then treated with the same anthraquinone formulation described in Example 2, and, again, representing various average particle sizes and an acetone solution with particle size <0.1 microns. Some tubes are left untreated as controls. After three hours' incubation at 30°C, sulfide levels in the liquid medium in the tubes is measured, and all compared with the control tubes to determine percent inhibition. Results at the 0.5 ppm anthraquinone level are as follows:

| Avg. Particle Size (microns) | Percent Inhibition |
|---|---|
| 5.66 | 0 |
| 3.61 | 8 |
| 2.13 | 76 |
| 1.34 | 95 |
| <0.1 | 97 |

Once again it is clear that there is a strong relationship between particle size in this range and inhibition.

### Example 4

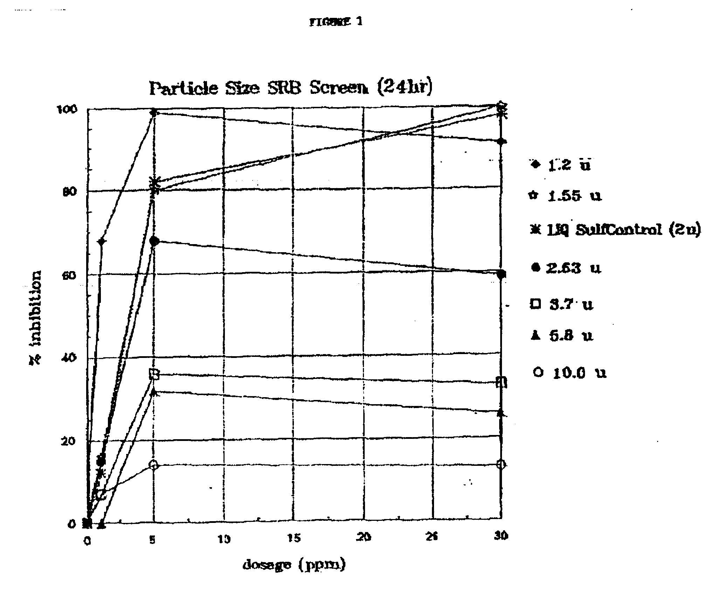

A series of runs are made using an anthraquinone wherein the anthraquinone has been ball milled to various average particle sizes of 1.2 microns, 1.55 microns, 2 microns, 2.63 microns, 3.7 microns, 5.8 microns and 10.0 microns. The anthraquinone dispersions contain 9,10-anthraquinone of the particle sizes reported in this example. The dispersions used to effect the treatment contain 51.5 wt. % 9,10-anthraquinone, 1 wt. % 10 mole nonylphenolethoxylate, 0.3 wt. % sodium lignosulfonate, 0.2 wt. % calcium lignosulfonate, 0.3 wt. % magnesium aluminum silicate, 0.1 wt. % 1,2 benzothiazolin-3-one, 0.2 wt. % polydimethylsiloxane, 2.5 wt. % propylene glycol and the remainder water. The effectiveness of the various anthraquinone particles with respect to effectiveness at inhibiting the growth of Desulfovibro desulfuricans strain G100A is tested by the method described in Example 1 using various parts per million (ppm) of the anthraquinone particles. The results of the tests after 24 hours are graphically depicted on Figure 1. As can be seen from Figure 1, after 24 hours the 1.2 micron particle size anthraquinone is nearly 100% effective at the 5ppm dosage level and slightly less effective at the 30 ppm dosage level. The 1.55 and 2 micron particle size anthraquinone materials are about 80% effective at the 5 ppm dosage level and are about 100% effective at the 30 ppm dosage level. The 2.63 micron particle size anthraquinone is moderately effective, but not as effective as the smaller particle size anthraquinone. The larger particle size anthraquinone, i.e. 3.7 micron, 5.8 micron and 10 micron exhibit poor inhibiting activity.

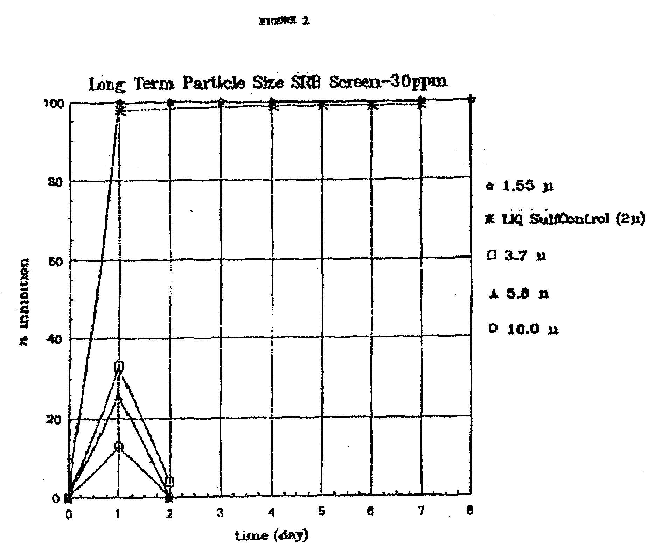

Figure 2 graphically depicts the effectiveness of the various particle size anthraquinone at the 30 ppm dosage level over a period of several days. As can be seen from an inspection of Figure 2, the 1.55 micron and 2 micron average particle size materials retain their approximately 100% effectiveness over a period of at least 7-8 days while the 3.7 micron and larger particle size anthraquinone essentially lose all of their effectiveness after only two days.

## Claims

1. A process of inhibiting sulfide production in a medium containing sulfate reducing bacteria by contacting the medium with a finely divided sulfite production inhibiting anthraquinone having a particle size less than 2.5 micron.

2. A process as claimed in claim 1 wherein the anthraquinone has an average particle size less than about 2 micron.

3. A process as claimed in claim 1 or claim 2 wherein the bacteria is contacted with 1 to 100, preferably 5 to 50 ppm of the anthraquinone.

4. A process as claimed in any one of the preceding claims wherein the anthraquinone is selected from anthraquinone, 1,8-dihydroxyanthraquinone, 1-chloroanthraquinone, 2-chloroanthraquinone-3-carboxylic acid, 1,5-dihydroxyanthraquinone, 1-aminoanthraquinone, 2-aminoanthraquinone, 2,6-dihydroxyanthraquinone, 1,2-dihydroxyanthraquinone, 1-hydroxyanthraquinone and 1,5-dichloroanthraquinone.

5. A process as claimed in any one of the preceding claims wherein the anthraquinone particles are coated with 2 to 15 weight percent of surfactant.

6. An anthraquinone exhibiting an inhibitory effect on the growth of sulfate-reducing bacteria the anthraquinone having an average particle size of less than 2.5 micron preferably 2 micron or less the particles optionally being coated with 2 to 15 weight percent of a surfactant.

7. Anthraquinone particles as claimed in claim 6 wherein the anthraquinone is selected from anthraquinone, 1,8-dihydroxyanthraquinone, 1-chloroanthraquinone, 2-chloroanthraquinone-3-carboxylic acid, 1,5-dihydroxyanthraquinone, 1-aminoanthraquinone, 2-aminoanthraquinone, 2,6-dihydroxyanthraquinone, 1,2-dihydroxyanthraquinone, 1-hydroxyanthraquinone and 1,5-dichloroanthraquinone.

8. An aqueous dispersion containing 10 to 60 weight percent of anthraquinone particles as claimed in claim 6 or claim 7.

9. An aqueous dispersion comprising:
i 10 to 60 wt% 9,10-anthraquinone
ii 0.5 to 2.5 wt% nonylphenolethoxylate
iii 0.1 to 1.5 wt% sodium lignosulfonate
iv 0.1 to 1.0 wt% calcium lignosulfonate and optionally 0.05 to 0.5 wt% 1,2-benzothiazolin-3-one, 0.05 to 2.0 wt% xanthan gum 0.1 to 1.0 wt% polydimethylsiloxane and 1.0 to 10 wt% propylene glycol and the remainder water.

10. An aqueous dispersion as claimed in claim 9 comprising:
45 to 55 wt% 9,10-anthraquinone
0.5 to 1.5 wt% nonylphenolethoxylate
0.2 to 0.5 wt% sodium lignosulfonate
0.1 to 0.3 wt% calcium lignosulfonate
0.1 to 0.5 wt% magnesium aluminium silicate optionally 0.05 to 0.5 wt% 1,2-benzothiazolin-3-one
0.1 to 0.4 wt% polydimethylsiloxane and
2 to 5 wt% propylene glycol,
and the remainder in water.

## Patentansprüche

1. Verfahren zur Hemmung der Sulfidproduktion in einem Medium, das Sulfat-reduzierende Bakterien enthält, indem das Medium mit einem fein zerteilten sulfitproduktionshemmenden Anthrachinon zusammengebracht wird, das eine Teilchengröße von weniger als 2,5 Micron aufweist.

2. Verfahren nach Anspruch 1, bei dem das Anthrachinon eine durchschnittliche Teilchengröße von weniger als etwa 2 Micron aufweist.

3. Verfahren nach Anspruch 1 oder Anspruch 2, bei dem die Bakterien mit 1 bis 100, vorzugsweise mit 5 bis 50 ppm Anthrachinon zusammengebracht werden.

4. Verfahren nach irgendeinem der vorhergehenden Ansprüche, bei dem das Anthrachinon ausgewählt wird aus Anthrachinon, 1,8-Dihydroxyanthrachinon, 1-Chloranthrachinon, 2-Chloranthrachinon-3-carbonsäure, 1,5-Dihydroxyanthrachinon, 1-Aminoanthrachinon, 2-Aminoanthrachinon, 2,6-Dihydroxyanthrachinon, 1,2-Dihydroxyanthrachinon, 1-Hydroxyanthrachinon und 1,5-Dichloranthranchinon.

5. Verfahren nach irgendeinem der vorhergehenden Ansprüche, bei dem die Anthrachinonteilchen mit 2 bis 15 Gew.-% oberflächenaktivem Mittel beschichtet sind.

6. Anthrachinon, das eine hemmende Wirkung auf das Wachstum von Sulfat-reduzierenden Bakterien aufweist, wobei das Anthrachinon eine durchschnittliche Teilchengröße von weniger als 2,5 Micron, vorzugsweise von 2 Micron oder weniger aufweist, wobei die Teilchen gegebenenfalls mit 2 bis 15 Gew.-% eines oberflächenaktiven Mittels beschichtet sind.

7. Anthrachinonteilchen nach Anspruch 6, in denen das Anthrachinon ausgewählt ist aus Anthrachinon, 1,8-Dihydroxyanthrachinon, 1-Chloranthrachinon, 2-Chloranthrachinon-3-carbonsäure, 1,5-Dihydroxyanthrachinon, 1-Aminoanthrachinon, 2-Aminoanthrachinon, 2,6-Dihydroxyanthrachinon, 1,2-Dihydroxyanthrachinon, 1-Hydroxyanthrachinon und 1,5-Dichloranthranchinon.

8. Wäßrige Dispersion, die 10 bis 60 Gew.-% Anthrachinonteilchen nach Anspruch 6 oder Anspruch 7 enthält.

9. Wäßrige Dispersion, die umfaßt:
i 10 bis 60 Gew.-% 9,10-Anthrachinon
ii 0,5 bis 2,5 Gew.-% Nonylphenolethoxylat
iii 0,1 bis 1,5 Gew.-% Natriumlignosulfonat
iv 0,1 bis 1,0 Gew.-% Calciumlignosulfonat und gegebenenfalls 0,05 bis 0,5 Gew.-% 1,2-Benzothiazolin-3-on, 0,05 bis 2,0 Gew.-% Xanthangummi, 0,1 bis 1,0 Gew.-% Polydimethylsiloxan und 1,0 bis 10 Gew.-% Propylenglycol und als Rest Wasser.

10. Wäßrige Dispersion nach Anspruch 9, die umfaßt:
45 bis 55 Gew.-% 9,10-Anthrachinon
0,5 bis 1,5 Gew.-% Nonylphenolethoxylat
0,2 bis 0,5 Gew.-% Natriumlignosulfonat
0,1 bis 0,3 Gew.-% Calciumlignosulfonat
0,1 bis 0,5 Gew.-% Magnesiumaluminiumsilicat, gegebenenfalls 0,05 bis 0,5 Gew.-% 1,2-Benzothiazolin-3-on,
0,1 bis 0,4 Gew.-% Polydimethylsiloxan und 2 bis 5 Gew.-% Propylenglycol und als Rest Wasser.

## Revendications

1. Un procédé pour inhiber la production de sulfure dans un milieu contenant des bactéries sulfato-réductrices, par mise en contact du milieu avec une anthraquinone finement divisée inhibant la production de sulfite, ayant une taille de particules inférieure à 2,5 micromètres.

2. Un procédé tel que revendiqué dans la revendication 1, dans lequel l'anthraquinone a une taille moyenne de particules inférieure à environ 2 micromètres.

3. Un procédé tel que revendiqué dans la revendication 1 ou la revendication 2, dans lequel les bactéries sont mises en contact avec 1 à 100 ppm, de préférence 5 à 50 ppm, de l'anthraquinone.

4. Un procédé tel que revendiqué dans l'une quelconque des revendications précédentes, dans lequel l'anthraquinone est choisie parmi l'anthraquinone, la 1,8-dihydroxyanthraquinone, la 1-chloroanthraquinone, l'acide 2-chloroanthraquinone-3-carboxylique, la 1,5-dihydroxyanthraquinone, la 1-aminoanthraquinone, la 2-aminoanthraquinone, la 2,6-dihydroxyanthraquinone, la 1,2-dihydroxyanthraquinone, la 1-hydroxyanthraquinone et la 1,5-dichloroanthraquinone.

5. Un procédé tel que revendiqué dans l'une quelconque des revendications précédentes, dans lequel les particules d'anthraquinone sont recouvertes de 2 à 15 pour cent en poids d'agent tensio-actif.

6. Une anthraquinone manifestant un effet inhibiteur sur la croissance de bactéries sulfato-réductrices, l'anthraquinone ayant une taille moyenne de particules inférieure à 2,5 micromètres, de préférence de 2 micromètres ou moins, les particules étant facultativement recouvertes de 2 à 15 pour cent en poids d'un agent tensio-actif.

7. Particules d' anthraquinone telles que revendiquées dans la revendication 6, dans lesquelles l'anthraquinone est choisie parmi l'anthraquinone, la 1,8-dihydroxyanthraquinone, la 1-chloroanthraquinone, l'acide 2-chloroanthraquinone-3-carboxylique, la 1,5-dihydroxyanthraquinone, la 1-aminoanthraquinone, la 2-aminoanthraquinone, la 2,6-dihydroxyanthraquinone, la 1,2-dihydroxyanthraquinone, la 1-hydroxyanthraquinone et la 1,5-dichloroanthraquinone.

8. Une dispersion aqueuse contenant 10 à 60 pour cent en poids de particules d'anthraquinone telles que revendiquées dans la revendication 6 ou la revendication 7.

9. Une dispersion aqueuse comprenant :
i 10 à 60 % en poids de 9,10-anthraquinone
ii 0,5 à 2,5 % en poids d'éthoxylat de nonylphénol
iii 0,1 à 1,5 % en poids de lignosulfonate de sodium
iv 0,1 à 1,0 % en poids de lignosulfonate de calcium, et
facultativement 0,05 à 0,5 % en poids de 1,2-benzothiazoline-3-one, 0,05 à 2,0 % en poids de gomme de xanthane, 0,1 à 1,0 % en poids de polydiméthylsiloxane et 1,0 à 10 % en poids de propylène-glycol, et de l'eau pour le complément.

10. Une dispersion aqueuse telle que revendiquée dans la revendication 9, comprenant :
45 à 55 % en poids de 9,10-anthraquinone
0,5 à 1,5 % en poids d'éthoxylat de nonylphénol
0,2 à 0,5 % en poids de lignosulfonate de sodium
0,1 à 0,3 % en poids de lignosulfonate de calcium
0,1 à 0,5 % en poids de silicate d'aluminium et de magnésium
facultativement 0,05 à 0,5 % en poids de 1,2-benzothiazoline-3-one, 0,1 à 0,4 % en poids de polydiméthylsiloxane et 2 à 5 % en poids de propylène-glycol, et de l'eau pour le complément.
